# EUROPÄISCHE PATENTSCHRIFT

(11) **EP 2 506 563 B1**
(45) Veröffentlichungstag und Bekanntmachung des Hinweises auf die Patenterteilung: **26.07.2017**
(21) Anmeldenummer: 12001744.7
(22) Anmeldetag: 14.03.2012
(51) Int. Cl.: H04N 5/268, H04N 5/232

(54) **Schaltvorrichtung**
Switching device
Dispositif de commutation

(30) Priorität: 30.03.2011 DE 102011015587
(43) Veröffentlichungstag der Anmeldung: 03.10.2012
(73) Patentinhaber: NEUTRIK AG, 9494 Schaan (LI)
(72) Erfinder: Ganahl, Christian, 6800 Feldkirch (AT)
(74) Vertreter: Fechner, Thomas

(56) Entgegenhaltungen:
- EP-A1- 1 615 453
- EP-A2- 0 837 605
- US-A- 5 592 321
- US-A1- 2005 134 746

## Beschreibung

Die vorliegende Erfindung betrifft eine Schaltvorrichtung zum wechselweisen Verbinden von zumindest einer Fernsehkamera mit einer von zumindest zwei Fernsehkamerakontrolleinheiten oder zum wechselweisen Verbinden von zumindest einer Fernsehkamerakontrolleinheit mit einer von zumindest zwei Fernsehkameras, wobei die Schaltvorrichtung Anschlüsse für die Fernsehkamera(s) und die Fernsehkamerakontrolleinheit(en) aufweist und jeder Anschluss elektrische Versorgungskontakte für die Strom- und Spannungsversorgung der Fernsehkamera durch die Fernsehkamerakontrolleinheit und zumindest einen optischen Kontakt für die Übertragung von Informationen über Lichtleiterkabel zwischen Fernsehkamera und Fernsehkontrolleinheit aufweist.

Die gattungsfremde US 5,592,321 beschreibt die optische Verbindung von mehreren Transmittern und mehreren Receivern, wobei jeder Transmitter mit jedem Receiver über jeweils eine optische Leitung verbunden ist und die jeweils gewünschte Verbindung über ein entsprechendes An- und Ausschalten mittels "liquid crystal panels" geschieht.

Die ebenfalls gattungsfremde EP 1 615 453 A1 beschreibt die Verbindung einer Videokamera mit einer Basis-Station mittels Triax-Leitungen. Es wird die in der Videokamera stattfindende Aufteilung des Videosignales in mehrere Teilsignale und die in der Basisstation erfolgende Kombination eben dieser Teilsignale zur Wiedergabe des Videosignales beschrieben. Einer von mehreren Triax-Ausgängen wird zur Stromversorgung der Kamera verwendet.

Beim Stand der Technik ist es zum Betrieb einer Fernsehkamera notwendig, diese mit einer Fernsehkamerakontrolleinheit zu verbinden. Diese Verbindung erfolgt oft über sogenannte Hybridkabel, wie z.B. SMPTE-Kabel, welche zumindest elektrische Leitungen für die Strom- und Spannungsversorgung der Fernsehkamera und optische Lichtwellenleiter für die Datenübertragung zwischen Fernsehkamera und Fernsehkamerakontrolleinheit aufweisen. Alternativ ist zur Verbindung einer Fernsehkamera mit einer Fernsehkamerakontrolleinheit auch die Verwendung von getrennten Kabeln, z.B. von einem Kabel für die elektrische Strom- und Spannungsversorgung und einem anderen Kabel für die optische und/oder elektrische Signalübertragung möglich. Die Fernsehkamerakontrolleinheiten sind meist zentral in Technikräumen oder dergleichen angeordnet, während die Fernsehkameras dort aufgestellt werden, wo sie benötigt werden, also z.B. in verschiedenen Fernsehstudios. Bei Fernsehübertragungen werden in der Regel mehrere Fernsehkameras benötigt, deren Zusammenstellung bzw. Set-Up vor der Sendung konfiguriert wird. Dabei kann es durchaus vorkommen, dass gewisse Kameras, welche an gewissen Orten aufgestellt sind, oder gewisse Kamerakontrolleinheiten für einen gewissen Zeitraum oder während einer bestimmten Sendung gar nicht benötigt werden. Es ist also nicht unbedingt notwendig, für jede Fernsehkamera eine eigene Fernsehkamerakontrolleinheit zur Verfügung zu stellen, so lange man die Möglichkeit hat, verschiedene Fernsehkameras mit verschiedenen Fernsehkamerakontrolleinheiten zu verbinden. Um das Verbinden und Umschalten zu ermöglichen, sind beim Stand der Technik Schaltvorrichtungen in Form von Steckfeldern bekannt, bei denen manuell Kabel umgesteckt werden, ähnlich wie dies früher in Telefonschaltzentralen der Fall war.

Diese Vorgehensweise ist zum Einen sehr aufwendig, zum Anderen aber auch fehleranfällig.

Aufgabe der Erfindung ist es, hier eine Verbesserung vorzuschlagen.

Dies wird erfindungsgemäß erreicht, indem die Schaltvorrichtung zumindest einen elektrischen Versorgungsleitungsschalter zum wechselweisen Verbinden der elektrischen Versorgungskontakte des Anschlusses für die Fernsehkamera oder eines der Anschlüsse für die Fernsehkameras mit den elektrischen Versorgungskontakten des Anschlusses für die Fernsehkamerakontrolleinheit oder eines der Anschlüsse für die Fernsehkamerakontrolleinheiten und zumindest einen optischen Schalter zum wechselweisen Verbinden des optischen Kontaktes des Anschlusses für die Fernsehkamera oder eines der Anschlüsse für die Fernsehkameras mit dem optischen Kontakt des Anschlusses für die Fernsehkamerakontrolleinheit oder eines der Anschlüsse für die Fernsehkamerakontrolleinheiten und zumindest eine Schaltkontrolleinheit zur Ansteuerung des elektrischen Versorgungsleitungsschalters und zur Ansteuerung des optischen Schalters aufweist.

Durch die Erfindung ist es nicht mehr notwendig, manuell Kabel umzustecken. Dies bildet zum Einen eine Vereinfachung, zum Anderen können durch die erreichte Automatisierung aber auch Kontrollmechanismen mit eingebaut werden, die eine Fehlbedienung vermeiden.

Ist eine Fernsehkamera momentan in Betrieb, so muss sie immer mit genau einer Fernsehkamerakontrolleinheit in Verbindung stehen. Über die elektrischen Versorgungskontakte erhält die Fernsehkamera den für den Betrieb benötigten elektrischen Strom. Über die optischen Kontakte erfolgt der Informationsaustausch zwischen Fernsehkamera und Fernsehkamerakontrolleinheit. Fernsehkamera, Fernsehkamerakontrolleinheit und die Hybridkabel, wie z.B. SMPTE-Kabel, bzw. getrennten Kabel zum Anschluss von Fernsehkamera und Fernsehkamerakontrolleinheit an die entsprechenden Anschlüsse der Schaltvorrichtung können wie beim Stand der Technik ausgebildet sein. Sie müssen hier nicht noch einmal erläutert werden. Die Neuerung bezieht sich auf die Möglichkeit des wechselweisen Verbindens von verschiedenen Fernsehkamerakontrolleinheiten mit verschiedenen Fernsehkameras mittels der erfindungsgemäßen Schaltvorrichtung. Der Begriff des wechselweisen Verbindens umfasst dabei sowohl das Einschalten bzw. Herstellen einer Verbindung zwischen einer bestimmten Kamera und einer bestimmten Kamerakontrolleinheit, als auch das Umschalten, bei dem eine Fernsehkamera mit einer anderen Fernsehkamerakontrolleinheit oder eine Fernsehkamerakontrolleinheit mit einer anderen Fernsehkamera verbunden wird. Weiters fällt unter den Begriff des wechselweisen Verbindens auch der Ausschaltvorgang, also das Trennen einer vorab bestehenden Verbindung zwischen Fernsehkamera und Fernsehkamerakontrolleinheit.

Der minimale Aufbau, ab dem es Sinn macht, eine erfindungsgemäße Schaltvorrichtung einzusetzen, liegt vor, wenn eine einzige Fernsehkamera wechselweise mit mindestens zwei Fernsehkamerakontrolleinheiten oder eine einzige Fernsehkamerakontrolleinheit wechselweise mit zumindest zwei Fernsehkameras über die Schaltvorrichtung verbunden werden soll. In der Praxis werden erfindungsgemäße Ausführungsformen aber häufig so ausgebildet sein, dass die Schaltvorrichtung mehrere Anschlüsse für mehrere Fernsehkameras und mehrere Anschlüsse für mehrere Fernsehkamerakontrolleinheiten aufweist. Grundsätzlich ist aber in der Regel vorgesehen, dass eine Fernsehkamera gleichzeitig immer nur mit einer Fernsehkamerakontrolleinheit verbunden ist und umgekehrt auch eine Fernsehkamerakontrolleinheit gleichzeitig immer nur mit einer Fernsehkamera verbunden ist.

Der Vollständigkeit halber wird darauf hingewiesen, dass eine Fernsehkamerakontrolleinheit eine von der Fernsehkamera physisch getrennte bzw. separate Baueinheit ist, welche die Fernsehkamera einerseits mit Strom bzw. Betriebsspannung versorgt, andererseits aber auch die Fernsehkamera ansteuert, sowie die von der Fernsehkamera gelieferten Informationen bzw. Daten, entsprechend wie beim Stand der Technik bekannt, weiter vermittelt bzw. verarbeitet.

Die Zahl der elektrischen Versorgungsleitungen wie auch der optischen Lichtleiterkabel in den zur Verbindung benötigen Hybridkabeln bzw. getrennten Kabeln kann variieren. Das Gleiche gilt entsprechend für die Anzahl der elektrischen Versorgungskontakte und der optischen Kontakte der jeweiligen Anschlüsse der Schaltvorrichtung für Fernsehkameras und Fernsehkamerakontrolleinheiten. In der Regel handelt es sich um zumindest zwei elektrische Versorgungskontakte und um zumindest einen optischen Kontakt. Es können aber auch mehr Versorgungskontakte bzw. optische Kontakte pro Anschluss sein. Dies richtet sich letztendlich nach verwendetem Fernsehkameratyp und nach Art der verwendeten Fernsehkamerakontrolleinheit.

Bevorzugte Ausgestaltungsformen der Erfindung sehen darüber hinaus vor, dass jeder Anschluss zusätzlich zumindest einen elektrischen Signalkontakt für die Übertragung von Informationen über zumindest eine elektrische Signalleitung zwischen Fernsehkamera und Fernsehkamerakontrolleinheit aufweist, und die Schaltvorrichtung zumindest einen elektrischen Signalleitungsschalter zum wechselweisen Verbinden des elektrischen Signalkontakts des Anschlusses für die Fernsehkamera oder eines der Anschlüsse für die Fernsehkameras mit dem elektrischen Signalkontakt des Anschlusses für die Fernsehkamerakontrolleinheit oder eines der Anschlüsse für die Fernsehkamerakontrolleinheiten aufweist. Entsprechende Hybridkabel bzw. bei getrennten Kabeln ggfls. auch Zusatzkabel, Fernsehkameratypen sowie Fernsehkamerakontrolleinheittypen, bei denen zusätzlich noch elektrische Signalleitungen zum Informationsaustausch zwischen Fernsehkamera und Fernsehkamerakontrolleinheit vorhanden sind, sind bekannt. In diesen Ausgestaltungsformen der Erfindung steuert die Schaltkontrolleinheit dann nicht nur den elektrischen Versorgungsleitungsschalter und den optischen Schalter sondern auch den elektrischen Signalleitungsschalter an. Günstigerweise werden von der Schaltkontrolleinheit alle in der Schaltvorrichtung vorhandenen Versorgungsleitungs- sowie gegebenenfalls Signalleitungsschalter sowie auch optischen Schalter gleichzeitig geschaltet, wenn eine Verbindung zwischen einer bestimmten Fernsehkamera und einer bestimmten Fernsehkamerakontrolleinheit neu hergestellt oder gelöst oder durch eine andere Verbindung ersetzt werden soll.

Bei den Signalkontakten wie auch den Versorgungskontakten handelt es sich grundsätzlich zwar um elektrische Kontakte, diese sind aber voneinander zu unterscheiden. So dienen die elektrischen Versorgungskontakte der Bereitstellung der für den Betrieb der Fernsehkamera benötigten Strom- und Spannungsversorgung. Hier können also relativ hohe Spannungen anliegen und relativ große Ströme fließen. Die Signalkontakte dienen hingegen zur elektrischen Informationsübermittlung, sodass sie mit wesentlich geringeren Spannungen und Strömen auskommen.

Besonders bevorzugte Ausgestaltungsformen der Erfindung sehen vor, dass die Schaltvorrichtung zumindest eine Spannungsmesseinheit zur Messung der zwischen den elektrischen Versorgungskontakten des Anschlusses oder eines der Anschlüsse, vorzugsweise für die Fernsehkamerakontrolleinheit oder eine der Fernsehkamerakontrolleinheiten, anliegenden elektrischen Spannung und/oder zumindest eine Strommesseinheit zur Messung des über zumindest einen der elektrischen Versorgungskontakte des Anschlusses oder eines der Anschlüsse, vorzugsweise für die Fernsehkamerakontrolleinheit oder eine der Fernsehkamerakontrolleinheiten, fließenden elektrischen Stromes aufweist. Hierdurch kann einerseits die Betriebssicherheit erhöht werden. Andererseits kann aber auch die missbräuchliche bzw. versehentliche Fehlbedienung vermieden werden. Mittels der Spannungsmesseinheit und/oder der Strommesseinheit wird es möglich, dass die Schaltvorrichtung, wenn sie einen Schaltbefehl erhält, zunächst einmal prüft, welche Spannungen derzeit an den elektrischen Versorgungskontakten anliegen und/oder welche Ströme über zumindest einen der Versorgungskontakte derzeit fließen. So kann z.B. verhindert werden, dass eine gerade benötigte Verbindung zwischen einer gewissen Fernsehkamera und einer gewissen Fernsehkamerakontrolleinheit versehentlich getrennt wird, obwohl sie noch im Betrieb ist und benötigt wird. Darüber hinaus ist es aber auch möglich Schaltvorgänge des elektrischen Versorgungsleitungsschalters und/oder des optischen Schalters und/oder des gegebenenfalls vorhandenen elektrischen Signalleitungsschalters nur dann zuzulassen, wenn die an den elektrischen Versorgungskontakten anliegende Spannung und/oder die über zumindest einen dieser elektrischen Versorgungskontakte fließenden Ströme gewisse Voraussetzungen erfüllen. Hierdurch wird es möglich sicherzustellen, dass die genannten Schalter und insbesondere der Versorgungsleitungsschalter nur in solchen Zuständen geschaltet wird bzw. werden, in denen die über ihn momentan fließenden Ströme und/oder an ihm anliegenden Spannungen gewisse vordefinierte Bedingungen erfüllen. Insbesondere kann hierdurch sichergestellt werden, dass die genannten Schalter nur im spannungs- bzw. stromlosen Zustand geschaltet werden, bzw. in Zuständen geschaltet werden, in denen die Spannungen und/oder Ströme so gering sind, dass es beim Schalten zu keiner Überlastung des Versorgungsleitungsschalters kommt. Hierdurch wird es möglich, wesentlich kleiner bauende und kostengünstigere Schalter zu verwenden. Diese müssen dann nicht mehr für Schaltvorgänge bei hohen Strömen und/oder Spannungen ausgelegt sein. Der Abgriff der Spannung und/oder Ströme mittels Spannungsmesseinheit und/oder Strommesseinheit kann direkt an den elektrischen Versorgungskontakten des oder der Anschlüsse für die Fernsehkamerakontrolleinheit bzw. Fernsehkamerakontrolleinheiten abgegriffen werden. Es ist aber auch ein Abgriff an anderer geeigneter Stelle innerhalb der Schaltvorrichtung möglich.

Generell gesprochen ist es günstig, vorzusehen, dass die Schaltkontrolleinheit zur Auswertung der Messwerte der Spannungsmesseinheit und/oder der Strommesseinrichtung mit dieser oder diesen in Verbindung steht und einen ersten Betriebsmodus aufweist, in dem sie ein Einschalten und/oder ein Umschalten und/oder ein Ausschalten des elektrischen Versorgungsleitungsschalters und des optischen Schalters und des gegebenenfalls vorhandenen elektrischen Signalleitungsschalters zulässt, und zumindest einen weiteren Betriebsmodus aufweist, in dem sie ein Einschalten und/oder ein Umschalten und/oder ein Ausschalten des elektrischen Versorgungsleitungsschalters und des optischen Schalters und des gegebenenfalls vorhandenen elektrischen Signalleitungsschalters unterbindet.

In einer ersten Ausgestaltungsform ist es dabei möglich, dass eine reine Spannungsauswertung erfolgt. Bei dieser kann dann z.B. vorgesehen sein, dass die Schaltkontrolleinheit sich im ersten Betriebsmodus befindet, wenn die von der Spannungsmesseinheit, vorzugsweise momentan, gemessene elektrische Spannung auf einem Spannungsgrenzwert oder unterhalb des Spannungsgrenzwertes liegt, und sich im weiteren Betriebsmodus befindet, wenn die von der Spannungsmesseinheit, vorzugsweise momentan, gemessene elektrische Spannung oberhalb des Spannungsgrenzwertes liegt. Ein Verfahren zum Betrieb einer solchen Schaltvorrichtung sieht dann somit vor, dass von der Schaltkontrolleinrichtung nur dann ein Einschalten und/oder ein Umschalten und/oder ein Ausschalten des elektrischen Versorgungsleitungsschalters und des optischen Schalters und des gegebenenfalls vorhandenen elektrischen Signalleitungsschalters zugelassen wird, wenn die von der Spannungsmesseinheit, vorzugsweise momentan, gemessene elektrische Spannung auf einem Spannungsgrenzwert oder unterhalb des Spannungsgrenzwertes liegt und die genannten Schaltvorgänge von der Schaltkontrolleinheit dann nicht zugelassen werden, wenn die von der Spannungsmesseinheit, vorzugsweise momentan, gemessene elektrische Spannung oberhalb des Spannungsgrenzwertes liegt.

In einer anderen Ausgestaltungsform werden für die Entscheidung, ob Schaltvorgänge zugelassen werden oder nicht, sowohl Spannung als auch Strom herangezogen. In solchen Ausgestaltungsformen ist dann günstigerweise vorgesehen, dass die Schaltkontrolleinheit sich im ersten Betriebsmodus befindet, wenn ein Wertepaar, bestehend aus der, vorzugsweise momentan, von der Spannungsmesseinheit gemessenen elektrischen Spannung und des, vorzugsweise momentan, von der Strommesseinheit gemessenen elektrischen Stromes innerhalb eines erlaubten Spannungs-Strom-Bereiches liegt, und sich im weiteren Betriebs-modus befindet, wenn sich dieses Wertepaar außerhalb des erlaubten Spannungs-Strom-Bereiches befindet. Liegt das Wertepaar genau auf einem der, den Spannungs-Strom-Bereich festlegenden Grenzwerte, so kann dies dann beispielsweise einem Wertepaar innerhalb des Spannungs-Strom-Bereichs gleich gesetzt werden. In diesen Ausgestaltungsformen sieht somit ein Verfahren zum Betrieb der Schaltvorrichtung vor, dass von der Schaltkontrolleinrichtung ein Einschalten und/oder ein Umschalten und/oder ein Ausschalten des elektrischen Versorgungsleitungsschalters und des optischen Schalters und des gegebenenfalls vorhandenen elektrischen Signalleitungsschalters dann zugelassen wird, wenn das Wertepaar bestehend aus der, vorzugsweise momentan, von der Spannungsmesseinheit gemessenen elektrischen Spannung und des, vorzugsweise momentan, von der Strommesseinheit gemessenen elektrischen Stromes innerhalb eines erlaubten Spannungs-Strom-Bereiches liegt und die genannten Schaltvorgänge von der Schaltkontrolleinrichtung nicht zugelassen werden, wenn sich dieses Wertepaar außerhalb des erlaubten Spannungs-Strom-Bereiches befindet.

Der Spannungs-Strom-Bereich kann in diesen Ausgestaltungsformen durch entsprechende Spannungs- und Stromgrenzwerte bzw. Schwellwerte definiert werden. Diese Schwell- bzw. Grenzwerte für Spannung und/oder Strom können in allen genannten Ausführungsformen vorgegeben oder auch einstellbar sein. Es ist auch eine Kombination der genannten Maßnahmen möglich, indem die Schaltkontrolleinheit sowohl den Spannungsgrenzwert als auch den Spannungs-Strom-Bereich zur Auswertung und Entscheidung, ob Schaltvorgänge zugelassen werden oder nicht, heranzieht.

Um Schaltbefehle in die Schaltvorrichtung bzw. deren Schaltkontrolleinheit eingeben zu können, gibt es verschiedene Möglichkeiten. So kann die Schaltvorrichtung selbst zumindest eine Handeingabevorrichtung zur Eingabe von Ein- und/oder Um und/oder Ausschaltbefehlen per Hand aufweisen. Dies können Schaltknöpfe, Tastaturen, Touchpads, Kippschalter und alle möglichen anderen beim Stand der Technik an sich bekannten Eingabevorrichtungen sein. Diese Handeingabevorrichtungen können von außen zugänglich direkt in ein Gehäuse der Schaltvorrichtung integriert sein.

Um eine Ansteuerung der Schaltvorrichtung und damit auch der Schaltkontrolleinheit von einer entfernten Position aus zu ermöglichen, kann aber auch vorgesehen sein, dass die Schaltvorrichtung zumindest eine Schnittstelle zur Eingabe von Ein- und/oder Um- und/oder Ausschaltbefehlen mittels einer externen Eingabevorrichtung aufweist. Hier kommen grundsätzlich alle beim Stand der Technik bekannten kabelbasierten oder kabellosen Arten der Fernsteuerung in Frage. Die externe Eingabevorrichtung kann eine Datenverarbeitungseinrichtung wie ein Personalcomputer oder Laptop oder ein Mobiltelefon oder dergleichen sein. In diesem Sinne handelt es sich bei der genannten Schnittstelle der Schaltvorrichtung günstigerweise um eine normierte Schnittstelle für den Anschluss von Standardkabeln oder um eine drahtlose Normschnittstelle wie Bluetooth, Funk oder Infrarot. Insbesondere sei hier die Möglichkeit der externen Ansteuerung über die Schnittstelle mittels deren Anbindung an ein Computer- und/oder Telefonnetz wie z.B. ein Intranet oder das Internet, z.B. über eine LAN- oder WLAN- Verbindung zu erwähnen.

Im Sinne einer kompakten Bauweise ist die erfindungsgemäße Schaltvorrichtung günstigerweise in Form eines einzigen zusammenhängenden Schaltkastens ausgebildet. In diesem Sinne ist es somit günstig, wenn die Schaltvorrichtung ein Gehäuse aufweist und der elektrische Versorgungsleitungsschalter und der optische Schalter sowie gegebenenfalls auch der elektrische Signalleitungsschalter und die Schaltkontrolleinheit im Inneren des Gehäuses und die Anschlüsse sowie gegebenenfalls auch die Handeingabevorrichtung und/oder die Schnittstelle von außen zugänglich am Gehäuse angeordnet sind.

Günstigerweise weist die Schaltvorrichtung eine Anzeigemöglichkeit auf, die dem Benutzer anzeigt, ob momentan ein Schaltvorgang möglich ist, oder nicht. Weiters kann auch eine Anzeige vorgesehen sein, die die momentan geschalteten Verbindungen zwischen Fernsehkameras und Fernsehkamerakontrolleinheiten oder andere Betriebszustände oder -parameter anzeigt. Diese Anzeigen können z.B. in Form von LED-Anzeigen, Kleinbildschirmen und dergleichen direkt am Gehäuse der Schaltvorrichtung realisiert sein. Es ist aber genauso gut möglich, all dies über die genannte Schnittstelle der Schaltvorrichtung auf der genannten externen Eingabevorrichtung anzuzeigen.

Der Vollständigkeit halber sei noch darauf hingewiesen, dass im Sinne einer integrierten Ausbildung der an der Schaltvorrichtung vorhandenen Anschlüsse günstigerweise vorgesehen ist, dass jeder Anschluss als eine einzige Anschlussbuchse oder als ein einziger Anschlussstecker ausgebildet ist und alle für das Anschließen einer Fernsehkamera bzw. einer Fernsehkamerakontrolleinheit benötigen Kontakte aufweist. Der Grundgedanke hierbei ist es, alle für den Anschluss einer Fernsehkamera bzw. einer Fernsehkamerakontrolleinheit benötigten elektrischen und optischen Kontakte in Form eines integrierten bzw. einzigen Anschlusssteckers oder in Form einer entsprechend integrierten einzigen Anschlussbuchse zu realisieren. Dies ist dann angebracht, wenn alle zur Verbindung von Fernsehkamera und Fernsehkamerakontrolleinheit benötigten Verbindungsleitungen zu einem einzigen Hybridkabel zusammengefasst sind. Werden anstelle eines einzigen Hybridkabels zwei oder mehrere voneinander getrennte Kabel verwendet, um die Fernsehkamera mit der Fernsehkamerakontrolleinheit zu verbinden, so sollten die Kontakte eines einzelnen Anschlusses der Schaltvorrichtung natürlich auch in entsprechenden, voneinander getrennten Steckern oder Buchsen angeordnet sein, welche den Anschluss dieser voneinander getrennten Kabel erlauben.

Weitere Merkmale und Einzelheiten bevorzugter Ausgestaltungsformen der vorliegenden Erfindung werden anhand der nachfolgenden Figurenbeschreibung erläutert. Es zeigen:
Fig. 1 eine Darstellung zum Stand der Technik;
Fig. 2 eine schematisierte Darstellung eines erfindungsgemäßen Ausführungsbeispiels;
Fig. 3 das Detail A aus Fig. 2;
Fig. 4 das Detail B aus Fig. 2;
Fig. 5 eine Darstellung zu den Grenzwerten bzw. Spannungs-Strom-Bereichen;
Fig. 6 ein erstes Ablaufschema und
Fig. 7 ein zweites Ablaufschema.

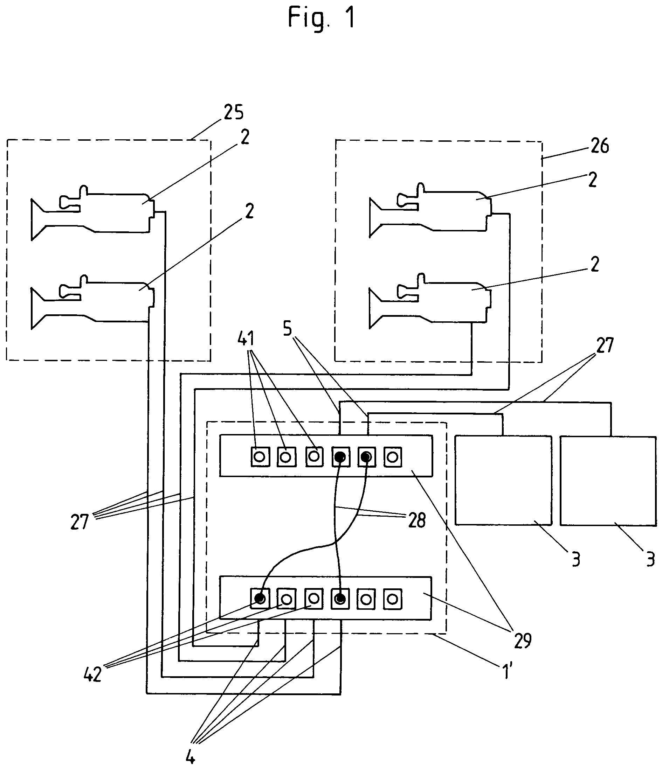

Fig. 1 zeigt beispielhaft eine Konfiguration in der vier Fernsehkameras 2 in zwei verschiedenen Studios 25 und 26 betrieben werden. Zum Betrieb dieser vier Fernsehkameras 2 sind im gezeigten Ausführungsbeispiel nur zwei Fernsehkamerakontrolleinheiten 3 vorgesehen. Da eine Fernsehkamera 2 in Betrieb immer mit genau einer Fernsehkamerakontrolleinheit 3 verbunden sein muss und umgekehrt, ist es in der dargestellten Konfiguration gemäß Fig. 1 immer nur möglich, zwei der vier Fernsehkameras 2 gleichzeitig zu betreiben. Hierdurch ist ein Umschalten der Verbindung zwischen den Fernsehkameras 2 und den Fernsehkamerakontrolleinheiten 3 notwendig, welches gemäß des Standes der Technik durch die dort schematisiert dargestellte Schaltvorrichtung 1' in Form von Steckfeldern ermöglicht wird. Diese Schaltvorrichtung 1' gemäß des Standes der Technik weist vier Anschlüsse 4 für die Fernsehkameras 2 und zwei Anschlüsse 5 für die Fernsehkamerakontrolleinheiten 3 auf. Die Anschlüsse 4 für die Fernsehkameras 2 befinden sich alle an einer ersten Steckleiste 29 bzw. einem ersten Steckfeld der Schaltvorrichtung 1'. Die Anschlüsse 5 für die Fernsehkamerakontrolleinheiten 3 befinden sich an einer zweiten Steckleiste 29 bzw. einem zweiten Steckfeld der Schaltvorrichtung 1'. Die entsprechenden Anschlüsse 4 sind über die an sich bekannten Hybridkabel 27 mit den Fernsehkameras 2 verbunden. Die Anschlüsse 5 sind über die entsprechenden, an sich bekannten Hybridkabel 27 mit den Fernsehkamerakontrolleinheiten 3 verbunden. Die Hybridkabel 27 umfassen sowohl elektrische Versorgungsleitungen zur Spannungs- und Stromversorgung der Fernsehkameras 2 als auch zumindest eine oder mehrere optische Signalleitungen in Form von Lichtleitkabeln. Darüber hinaus umfassen die Hybridkabel 27 in der Regel auch noch elektrische Signalleitungen. Die optischen Leitungen und die elektrischen Signalleitungen dienen dem Informationsaustausch zwischen Fernsehkamera 2 und Fernsehkamerakontrolleinheit 3. Die elektrischen Versorgungsleitungen dienen der Strom- und Spannungsversorgung der Fernsehkamera 2 durch die Fernsehkamerakontrolleinheit 3. Die Anschlüsse 4 und 5 der Schaltvorrichtung 1 weisen eine entsprechende Anzahl von hier nicht im Detail dargestellten elektrischen Versorgungskontakten 4 und 5, optischen Kontakten 8 und 9 und elektrischen Signalkontakten 15 und 16 auf.

Beim Stand der Technik wird nun ein gewünschter Ein-, Um- oder Ausschaltvorgang manuell getätigt, indem mittels der Schaltkabel 28 die gewünschte Verbindung zwischen einer der Fernsehkamerakontrolleinheiten 3 und einer der Fernsehkameras 2 hergestellt oder gelöst wird. Hierzu werden die entsprechenden Stecker der Schaltkabel 28 von Hand in die entsprechenden Buchsen 41 und 42 der Steckleisten bzw. Steckfelder 29 gesteckt. Dies ist einerseits aufwendig und zum Anderen aber auch fehleranfällig.

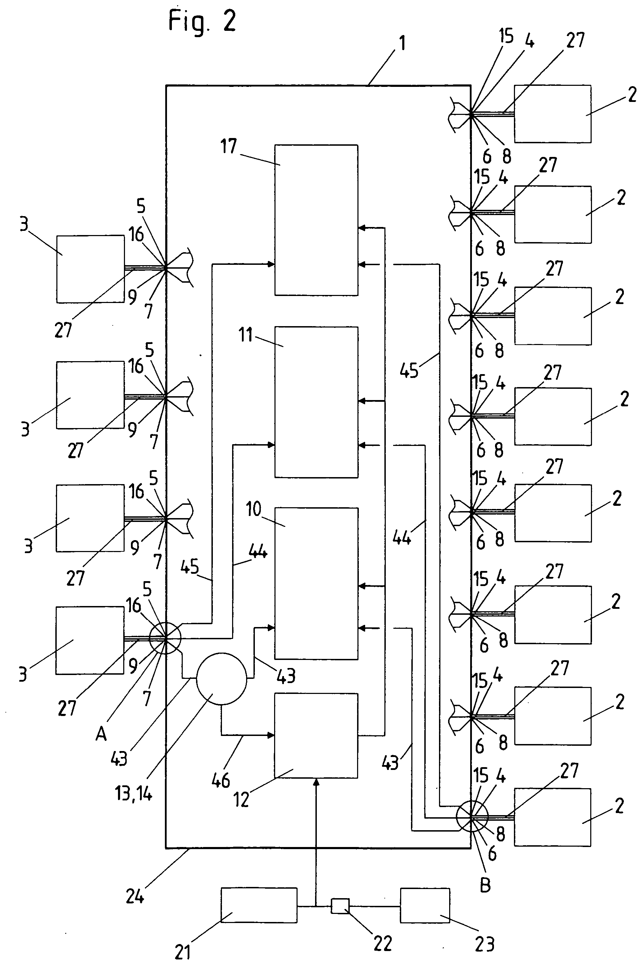

Um die Notwendigkeit des manuellen Umsteckens zu vermeiden, sieht die Erfindung eine Schaltvorrichtung 1 vor, wie sie beispielhaft in Fig. 2 schematisch gezeichnet ist. Bei dieser werden die Ein- und/oder Um- und/oder Ausschaltvorgänge mittels der Schaltkontrolleinheit 12, des Versorgungsleitungsschalters 10 und des optischen Schalters 11 sowie hier auch mittels des elektrischen Signalleitungsschalters 17 durchgeführt. Alle diese genannten Schalter 10, 11, 17 werden von der Schaltkontrolleinheit 12 angesteuert. Diese steht einerseits mit der hier integriert ausgebildeten Spannungsmesseinheit 13 und Strommesseinheit 14 in Verbindung. Andererseits empfängt die Schaltkontrolleinheit 12 Umschaltbefehle entweder von der Handeingabevorrichtung 21 oder der Schnittstelle 22 und der externen Eingabevorrichtung 23. Natürlich können Handeingabevorrichtung 21 und Schnittstelle 22 auch beide zusammen bei der Schaltvorrichtung 1 realisiert sein. Die verschiedenen Ausgestaltungsformen der Handeingabevorrichtung 21 sowie der Schnittstelle 22 und der externen Eingabevorrichtung 23 wurden bereits eingangs erläutert. Bei der Schaltkontrolleinheit 12 kann es sich um einen geeigneten Mikroprozessor oder dergleichen handeln. Auch Spannungsmesseinheit und Strommesseinheit 13 und 14 können integriert oder getrennt voneinander in verschiedensten Ausgestaltungsformen, wie sie beim Stand der Technik bekannt sind, realisiert werden. Das Gleiche gilt auch für den elektrischen Versorgungsleitungsschalter 10, den optischen Schalter 11 und den elektrischen Signalleitungsschalter 17. Für die elektrischen Schalter 10 und 17 sind beim Stand der Technik geeignete Schaltrelais und elektronische Schaltungen bekannt. Geeignete optische Schalter 11 sind ebenfalls bekannt. Es wird beispielhaft auf die EP 1 413 912 A1 und die US 5,247,594 A verwiesen.

Im gezeigten Ausführungsbeispiel weist die Schaltvorrichtung 1 insgesamt vier Anschlüsse 5 für Fernsehkamerakontrolleinheiten 3 auf. Bei der dargestellten Konfiguration ist an jedem dieser Anschlüsse 5 über ein entsprechendes Hybridkabel 27, wie z.B. einem SMPTE-Kabel, wie es beim Stand der Technik bekannt ist, eine entsprechende beim Stand der Technik bekannte Fernsehkamerakontrolleinheit 3 angeschlossen. Weiters besitzt das gezeigte Ausführungsbeispiel der erfindungsgemäßen Schaltvorrichtung 1 insgesamt 8 Anschlüsse 4 für insgesamt acht Fernsehkameras 2, welche ebenfalls über die an sich bekannten Hybridkabel 27 an den entsprechenden Anschlüssen 4 der Schaltvorrichtung 1 angeschlossen sind. Die Anschlüsse 4 und 5 sind günstigerweise jeweils in Form von eingangs bereits genannten integrierten Steckern oder Buchsen ausgeführt und befinden sich günstigerweise außen am Gehäuse 24 der Schaltvorrichtung 1. Sollten hingegen die Verbindungen zwischen Fernsehkamera und Fernsehkamerakontrolleinheit mittels getrennter Kabel realisiert sein, so sind die einzelnen Anschlüsse 4 und 5 auch in entsprechend passend ausgeführten, getrennten Steckern oder Buchsen auszuführen. Auch die Handeingabevorrichtung 21, die Schnittstelle 22 sowie gegebenenfalls vorhandene aber hier nicht dargestellte Anzeigeeinrichtungen sind günstigerweise ebenfalls außen am Gehäuse 24 angebracht.

Im Inneren des Gehäuses 24 befinden sich im gezeigten Ausführungsbeispiel die Schaltkontrolleinheit 12 sowie der elektrische Versorgungsleitungsschalter 10, der optische Schalter 11 und der elektrische Signalleitungsschalter 17 sowie die entsprechende Verkabelung mit den Anschlüssen 4 und 5. Diese Verkabelung innerhalb der Schaltvorrichtung 1 ist im gezeigten Ausführungsbeispiel der Fig. 2 im Sinne der Übersichtlichkeit nur im vereinfachten bzw. reduzierten Umfang dargestellt. Fig. 2 zeigt beispielhaft lediglich die Verbindung zwischen einem der Anschlüsse 5 und einem der Anschlüsse 4 mit den dazwischen geschalteten drei Schaltern 10, 11 und 17. In der Realität sind die anderen Anschlüsse 4 und 5 in gleicher Weise mit den Schaltern 10, 11 und 17 sowie mit der Schaltkontrolleinheit 12 verbunden.

Auch die eingezeichneten elektrischen Versorgungsleitungen 43, optischen Leitungen 44 und elektrischen Signalleitungen 45 innerhalb der Schaltvorrichtung 1 sind nur schematisiert und vereinfacht dargestellt. Dies gilt auch für die Strom- und Spannungssignalleitungen 46. In Realität handelt es sich in der Regel um zumindest zwei elektrische Versorgungsleitungen, um eine oder mehrere optische Signalleitungen 44 und auch um eine oder mehrere elektrische Signalleitungen 45, jeweils pro Anschluss 4 und/oder 5. Auch die Strom- und Spannungssignalleitungen sind in der Regel als separate Leitungen ausgeführt. Die Spannungsmesseinheit 13 misst in der Regel die Spannung zwischen zwei elektrischen Versorgungsleitungen 43 bzw. den zugeordneten elektrischen Versorgungskontakten 6 und 7. Diese Messung erfolgt günstigerweise möglichst nah oder direkt am Anschluss 5 für die jeweilige Fernsehkamerakontrolleinheit 3. Die Strommessung erfolgt über zumindest eine der elektrischen Versorgungsleitungen 43 bzw. an einem der elektrischen Versorgungskontakte 6 und 7.

Wie bereits eingangs erläutert, erhält die Schaltkontrolleinheit 12 über die Handeingabevorrichtung 21 und/oder die Schnittstelle 22 einen Befehl zum Ein-, Um- oder Ausschalten einer Verbindung zwischen einer der Fernsehkamerakontrolleinheiten 3 und einer der Fernsehkameras 2. Bevor die Schaltkontrolleinheit entsprechende Schaltbefehle an den elektrischen Versorgungsleitungsschalter 10, den optischen Schalter 11 und den elektrischen Signalleitungsschalter 17 weitergibt, fragt sie zunächst die Messwerte der jeweiligen Spannungsmesseinheiten 1 und/oder Strommesseinheiten 14 ab und entscheidet dann anhand der beispielhaft weiter unten erläuterten Kriterien, in welchem Betriebsmodus sie sich befindet und damit ob der gewünschte Schaltvorgang durchgeführt wird oder nicht. Liegen die abgefragten Spannungs- und/oder Stromwerte innerhalb erlaubter Kriterien, so befindet sich die Schaltkontrolleinheit 12 in ihrem ersten Betriebsmodus, in dem sie einen entsprechenden Schaltvorgang zulässt. Liegen die abgefragten Spannungs- und/oder Strommesswerte außerhalb der vorgegebenen Kriterien, so befindet sich die Schaltkontrolleinheit 12 in ihrem weiteren Betriebsmodus, in dem sie den gewünschten Schaltvorgang unterbindet. Hierdurch kann, wie bereits erläutert, verhindert werden, dass ein Schaltvorgang versehentlich ausgeführt wird, oder bei Spannungen oder Strömen ausgeführt wird, bei denen der elektrische Versorgungsleitungsschalter 10 zu Schaden kommen könnte. Durch diese Absicherung ist es möglich, relativ klein bauende und kostengünstige elektrische Versorgungsleitungsschalter 10 einzusetzen.

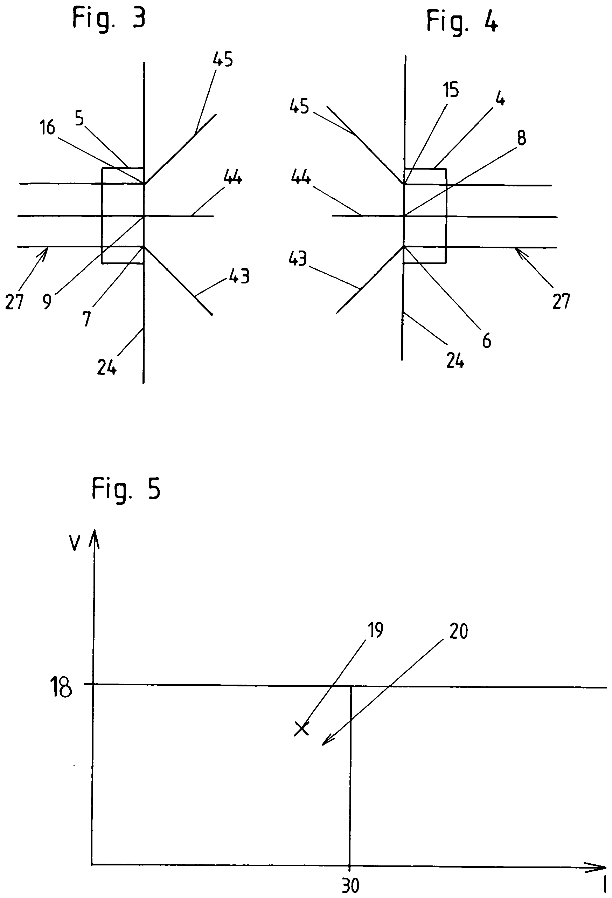

Fig. 3 zeigt vergrößert den schematisch dargestellten Bereich A aus Fig. 2, in dem ein Anschluss 5 für eine Fernsehkamerakontrolleinheit 3 bzw. deren Hybridkabel 27 dargestellt ist. Der Anschluss 5 ist integriert ausgebildet, er umfasst hier in Form einer Anschlussbuchse alle für den Anschluss eines Hybridkabels 27 bzw. einer Fernsehkamerakontrolleinheit 3 benötigten elektrischen Versorgungskontakte 7, optischen Kontakte 9 und elektrischen Signalkontakte 16. Es handelt sich dabei um eine entsprechende Anzahl von elektrischen Versorgungskontakten 7, optischen Kontakten 9 und elektrischen Signalkontakten 16, damit dies mit dem gewählten Typ der Fernsehkamerakontrolleinheit 3 und das Hybridkabel 27 zusammenpasst. Das Gleiche gilt für den in Fig. 4 vergrößert dargestellten Bereich B mit einem der Anschlüsse 4 für die Fernsehkamera 2 bzw. deren Hybridkabel 27.

In Fig. 5 sind schematisiert mögliche Entscheidungsparameter in Form eines Spannungs-Strom (V-I) - Diagramms dargestellt. 18 zeigt schematisiert einen Spannungsgrenzwert. Mit Hilfe dessen kann die Schaltkontrolleinheit 12 z.B. entscheiden, ob der von der Spannungsmesseinheit 13 momentan gemessene Spannungswert ein Anschließen einer Fernsehkamera 2 an eine Fernsehkamerakontrolleinheit 3 zulässt oder nicht. Liegt der gemessene Spannungswert über dem Spannungsgrenzwert 18, so wird der gewünschte Schaltvorgang nicht zugelassen, liegt er darauf oder darunter, so steuert die Schaltkontrolleinheit 12 bei Vorliegen eines entsprechenden externen Schaltbefehls den elektrischen Versorgungsleitungsschalter 10, den optischen Schalter 11 und den elektrischen Signalleitungsschalter 17 so an, dass die gewünschte Verbindung zwischen der jeweiligen Fernsehkamera 2 und der jeweiligen Fernsehkamerakontrolleinheit 3 hergestellt wird.

Abweichend hiervon ist es aber auch möglich, Spannung und Strom zur Auswertung heranzuziehen. So kann über einen entsprechenden Spannungsgrenzwert 18 und einen entsprechenden Stromgrenzwert 30 ein Spannungsstrombereich 20 definiert werden, in dem entsprechende Wertepaare 19 aus mittels Spannungsmesseinheit 13 und Strommesseinheit 14 gemessenen Spannungs- und Stromwerten liegen müssen, damit die Schaltkontrolleinheit 12 einen entsprechenden über die Schnittstelle 22 oder die Handeingabevorrichtung 21 eingegebenen Schaltbefehl zulässt bzw. ausführt. Liegt das Wertepaar 19 aus gemessener Spannung und gemessenem Strom außerhalb dieses erlaubten Spannungsstrombereiches 20, so wird der genannte Schaltbefehl von der Schaltkontrolleinheit 12 nicht ausgeführt. Der benötigte Spannungsgrenzwert 18 und/oder Stromgrenzwert 30 können fix vorgegeben, aber auch einstellbar sein.

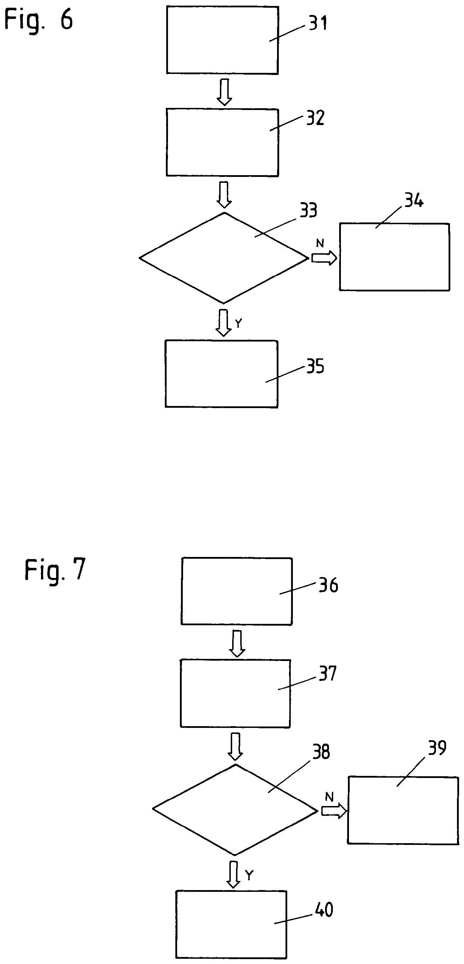

Fig. 6 zeigt beispielhaft noch ein Entscheidungsdiagramm zu einer ersten Ausgestaltungsform der geschilderten Abfrage. So erhält die Schaltkontrolleinheit 12 im Schritt 31 den Befehl von außen, eine gewisse Fernsehkamera 2 mit einer gewissen Fernsehkamerakontrolleinheit 3 zu verbinden. Es handelt sich also um eine Art Einschaltbefehl 31. Im nächsten Schritt erfolgt die Spannungsabfrage 32 an der Spannungsmesseinheit 13. Im Entscheidungsschritt 33 entscheidet die Schaltkontrolleinheit 12, ob sie den gewünschten Schaltvorgang zulässt, indem sie den Messwert der Spannungsmesseinheit 13 mit dem Spannungsgrenzwert 18 vergleicht. Liegt der gemessene Spannungswert unter oder auf dem Spannungsgrenzwert 18, so erfolgt im Schritt 35 der gewünschte Einschaltvorgang. Ist dieses Kriterium nicht erfüllt, so erfolgt die negative Entscheidung 34. Der Schaltvorgang wird dann nicht ausgeführt. Es kann gegebenenfalls eine entsprechende Warnung optisch, akustisch oder sonst irgendwie ausgegeben werden.

Fig. 7 zeigt ein Ablaufschema zum Trennen der Verbindung zwischen einer Fernsehkamera 2 und einer Fernsehkamerakontrolleinheit 3, also einen Ausschaltvorgang. Das Hinweiszeichen 36 symbolisiert den Ausschaltbefehl zum Trennen der Verbindung zwischen Fernsehkamerakontrolleinheit 3 und Fernsehkamera 2. In Schritt 37 erfolgt die Strom- und Spannungsabfrage an der Strommesseinheit 14 und der Spannungsmesseinheit 13. Anhand dieser abgefragten Messwerte und des sich daraus bildenden Wertepaares 19 prüft die Schaltkontrolleinheit 12 dann, ob das Wertepaar 19 im erlaubten Spannungs-Strom-Bereichs 20 liegt oder nicht. Liegt das Wertepaar 19 in diesem erlaubten Spannungs-Strom-Bereich 20, so erfolgt unter Punkt 40 der gewünschte Ausschaltvorgang, also die Trennung der Fernsehkamera 2 von der Fernsehkamerakontrolleinheit 3 durch entsprechendes Umschalten der elektrischen Versorgungsleitungsschalter 10, des optischen Schalters 11 und des elektrischen Signalleitungsschalters 17. Liegt das gemessene Wertepaar 19 außerhalb des erlaubten Spannungsstrombereiches 20 so wird der Ausschaltbefehl 36 nicht ausgeführt. Es erfolgt somit die negative Entscheidung 39, die wiederum von einem entsprechenden Warnsignal begleitet sein kann.

Für einen Umschaltvorgang, also z.B. für das Verbinden einer Fernsehkamerakontrolleinheit 3 mit einer anderen Fernsehkamera 2 kann zunächst der Ausschaltvorgang gemäß Ablauf nach Fig. 7 und dann der Einschaltvorgang gemäß Ablaufschema nach Fig. 6 erfolgen.

**Legende zu den Hinweisziffern:**

| | | | |
|---|---|---|---|
| 1, 1' | Schaltvorrichtung | 24 | Gehäuse |
| 2 | Fernsehkamera | 25 | Studio |
| 3 | Fernsehkamerakontrolleinheit | 26 | Studio |
| 4 | Anschluss | 27 | Hybridkabel |
| 5 | Anschluss | 28 | Schaltkabel |
| 6 | elektrischer Versorgungskontakt | 29 | Steckleiste |
| 7 | elektrischer Versorgungskontakt | 30 | Stromgrenzwert |
| 8 | optischer Kontakt | 31 | Einschaltbefehl |
| 9 | optischer Kontakt | 32 | Spannungsabfrage |
| 10 | elektrischer Versorgungsleitungsschalter | 33 | Entscheidung |
| | | 34 | negative Entscheidung |
| 11 | optischer Schalter | 35 | Einschaltvorgang |
| 12 | Schaltkontrolleinheit | 36 | Ausschaltbefehl |
| 13 | Spannungsmesseinheit | 37 | Strom- und Spannungsabfrage |
| 14 | Strommesseinheit | 38 | Entscheidung |
| 15 | elektrischer Signalkontakt | 39 | negative Entscheidung |
| 16 | elektrischer Signalkontakt | 40 | Ausschaltvorgang |
| 17 | elektrischer Signalleitungsschalter | 41 | Buchse |
| | | 42 | Buchse |
| 18 | Spannungsgrenzwert | 43 | elektrische Versorgungsleitung |
| 19 | Wertepaar | 44 | optische Signalleitung |
| 20 | Spannung-Strom-Bereich | 45 | elektrische Signalleitung |
| 21 | Handeingabevorrichtung | 46 | Strom- und Spannungssignalleitung |
| 22 | Schnittstelle | | |
| 23 | externe Eingabevorrichtung | | |

## Patentansprüche

1. Schaltvorrichtung (1) zum wechselweisen Verbinden von zumindest einer Fernsehkamera (2) mit einer von zumindest zwei Fernsehkamerakontrolleinheiten (3) oder zum wechselweisen Verbinden von zumindest einer Fernsehkamerakontrolleinheit (3) mit einer von zumindest zwei Fernsehkameras (2),
wobei die Schaltvorrichtung (1) Anschlüsse (4, 5) für die mindestens eine Fernsehkamera (2) und die mindestens eine Fernsehkamerakontrolleinheit (3) aufweist und
jeder Anschluss (4, 5) elektrische Versorgungskontakte (6, 7) für die Strom- und Spannungsversorgung der Fernsehkamera (2) durch die Fernsehkamerakontrolleinheit (3) und zumindest einen optischen Kontakt (8, 9) für die Übertragung von Informationen über Lichtleiterkabel zwischen Fernsehkamera (2) und Fernsehkamerakontrolleinheit (3) aufweist, wobei
die Schaltvorrichtung (1) zumindest einen elektrischen Versorgungsleitungsschalter (10) zum wechselweisen Verbinden der elektrischen Versorgungskontakte (6) des Anschlusses (4) für die Fernsehkamera (2) oder eines der Anschlüsse (4) für die Fernsehkameras (2) mit den elektrischen Versorgungskontakten (7) des Anschlusses (5) für die Fernsehkamerakontrolleinheit (3) oder eines der Anschlüsse (5) für die Fernsehkamerakontrolleinheiten (3) und
zumindest einen optischen Schalter (11) zum wechselweisen Verbinden des optischen Kontaktes (8) des Anschlusses (4) für die Fernsehkamera (2) oder eines der Anschlüsse (4) für die Fernsehkameras (2) mit dem optischen Kontakt (9) des Anschlusses (5) für die Fernsehkamerakontrolleinheit (3) oder eines der Anschlüsse (5) für die Fernsehkamerakontrolleinheiten (3) und
zumindest eine Schaltkontrolleinheit (12) zur Ansteuerung des elektrischen Versorgungsleitungsschalters (10) und zur Ansteuerung des optischen Schalters (11) aufweist.

2. Schaltvorrichtung (1) nach Anspruch 1, **dadurch gekennzeichnet, dass** die Schaltvorrichtung (1) zumindest eine Spannungsmesseinheit (13) zur Messung der zwischen den elektrischen Versorgungskontakten (6, 7) des Anschlusses (4, 5) oder eines der Anschlüsse (4, 5), vorzugsweise für die Fernsehkamerakontrolleinheit (3) oder eine der Fernsehkamerakontrolleinheiten (3), anliegenden elektrischen Spannung und/oder zumindest eine Strommesseinheit (14) zur Messung des über zumindest einen der elektrischen Versorgungskontakte (6, 7) des Anschlusses (4, 5) oder eines der Anschlüsse (4, 5), vorzugsweise für die Fernsehkamerakontrolleinheit (3) oder eine der Fernsehkamerakontrolleinheiten (3), fließenden elektrischen Stromes aufweist.

3. Schaltvorrichtung (1) nach Anspruch 1 oder 2, **dadurch gekennzeichnet, dass** jeder Anschluss (4, 5) zusätzlich zumindest einen elektrischen Signalkontakt (15, 16) für die Übertragung von Informationen über zumindest eine elektrische Signalleitung zwischen Fernsehkamera (2) und Fernsehkamerakontrolleinheit (3) aufweist, und die Schaltvorrichtung (1) zumindest einen elektrischen Signalleitungsschalter (17) zum wechselweisen Verbinden des elektrischen Signalkontakts (15) des Anschlusses für die Fernsehkamera (2) oder eines der Anschlüsse (4) für die Fernsehkameras (2) mit dem elektrischen Signalkontakt (16) des Anschlusses (5) für die Fernsehkamerakontrolleinheit (3) oder eines der Anschlüsse (5) für die Fernsehkamerakontrolleinheiten (3) aufweist.

4. Schaltvorrichtung (1) nach Anspruch 2 oder 3, **dadurch gekennzeichnet, dass** die Schaltkontrolleinheit (12) zur Auswertung der Messwerte der Spannungsmesseinheit (13) und/oder der Strommesseinheit (14) mit dieser oder diesen in Verbindung steht und einen ersten Betriebsmodus aufweist, in dem sie ein Einschalten und/oder ein Umschalten und/oder ein Ausschalten des elektrischen Versorgungsleitungsschalters (10) und des optischen Schalters (11) und des gegebenenfalls vorhandenen elektrischen Signalleitungsschalters (17) zu-lässt, und zumindest einen weiteren Betriebsmodus aufweist, in dem sie ein Einschalten und/oder ein Umschalten und/oder ein Ausschalten des elektrischen Versorgungsleitungsschalters (10) und des optischen Schalters (11) und des gegebenenfalls vorhandenen elektrischen Signalleitungsschalters (17) unterbindet.

5. Schaltvorrichtung (1) nach Anspruch 4, **dadurch gekennzeichnet, dass** die Schaltkontrolleinheit (12) sich im ersten Betriebsmodus befindet, wenn die von der Spannungsmesseinheit (13), vorzugsweise momentan, gemessene elektrische Spannung auf einem Spannungsgrenzwert (18) oder unterhalb eines Spannungsgrenzwertes (18) liegt, und sich im weiteren Betriebsmodus befindet, wenn die von der Spannungsmesseinheit (13), vorzugsweise momentan, gemessene elektrische Spannung oberhalb des Spannungsgrenzwertes (18) liegt.

6. Schaltvorrichtung (1) nach Anspruch 4 oder 5, **dadurch gekennzeichnet, dass** die Schaltkontrolleinheit (12) sich im ersten Betriebsmodus befindet, wenn ein Wertepaar (19), bestehend aus der, vorzugsweise momentan, von der Spannungsmesseinheit (13) gemessenen elektrischen Spannung und des, vorzugsweise momentan, von der Strommesseinheit (14) gemessenen elektrischen Stromes, innerhalb eines erlaubten Spannungs-Strom-Bereiches (20) liegt, und sich im weiteren Betriebsmodus befindet, wenn sich dieses Wertepaar (19) außerhalb des erlaubten Spannungs-Strom-Bereiches (20) befindet.

7. Schaltvorrichtung (1) nach einem der Ansprüche 1 bis 6, **dadurch gekennzeichnet, dass** die Schaltvorrichtung (1) zumindest eine Handeingabevorrichtung (21) zur Eingabe von Ein- und/oder Um- und/oder Ausschaltbefehlen per Hand und/oder zumindest eine Schnittstelle (22) zur Eingabe von Ein- und/oder Um- und/oder Ausschaltbefehlen mittels einer externen Eingabe-vorrichtung (23) aufweist.

8. Schaltvorrichtung (1) nach einem der Ansprüche 1 bis 7, **dadurch gekennzeichnet, dass** jeder Anschluss (4, 5) als eine einzige Anschlussbuchse oder als ein einziger Anschlussstecker ausgebildet ist und alle für das Anschließen einer Fernsehkamera (2) bzw. einer Fernsehkamerakontrolleinheit (3) benötigen Kontakte (6, 7, 8, 9, 15, 16) aufweist.

9. Schaltvorrichtung (1) nach einem der Ansprüche 1 bis 8, **dadurch gekennzeichnet, dass** die Schaltvorrichtung (1) mehrere Anschlüsse (4) für mehrere Fernsehkameras (2) und mehrere Anschlüsse (5) für mehrere Fernsehkamerakontrolleinheiten (3) aufweist.

10. Schaltvorrichtung (1) nach einem der Ansprüche 1 bis 9, **dadurch gekennzeichnet, dass** die Schaltvorrichtung (1) ein Gehäuse (24) aufweist und der elektrische Versorgungsleitungsschalter (10) und der optische Schalter (11) sowie gegebenenfalls auch der elektrische Signalleitungsschalter (17) und die Schaltkontrolleinheit (12) im Inneren des Gehäuses (24) und die Anschlüsse (4, 5) sowie gegebenenfalls auch die Handeingabevorrichtung (21) und/oder die Schnittstelle (22) von außen zugänglich am Gehäuse (24) angeordnet sind.

## Claims

1. Switching device (1) for the alternating connection of at least one television camera (2) to one of at least two television camera control units (3) or for the alternating connection of at least one television camera control unit (3) to one of at least two television cameras (2),
the switching device (1) having connectors (4, 5) for the at least one television camera (2) and the at least one television camera control unit (3), and each connector (4, 5) having electrical supply contacts (6, 7) for the current and voltage supply of the television camera (2) by the television camera control unit (3) and at least one optical contact (8, 9) for the transmission of information via fibre-optic cables between the television camera (2) and the television camera control unit (3),
the switching device (1) having at least one electrical supply line switch (10) for the alternating connection of the electrical supply contacts (6) of the connector (4) for the television camera (2) or one of the connectors (4) for the television cameras (2) with the electrical supply contacts (7) of the connector (5) for the television camera control unit (3) or one of the connectors (5) for the television camera control units (3) and
at least one optical switch (11) for the alternating connection of the optical contact (8) of the connector (4) for the television camera (2) or one of the connectors (4) for the television cameras (2) with the optical contact (9) of the connector (5) for the television camera control unit (3) or one of the connectors (5) for the television camera control units (3) and
at least one switching control unit (12) to actuate the electrical supply line switch (10) and to actuate the optical switch (11).

2. Switching device (1) according to claim 1, **characterised in that** the switching device (1) has at least one voltage measurement unit (13) to measure the electrical voltage present between the electrical supply contacts (6, 7) of the connector (4, 5) or one of the connectors (4, 5), preferably for the television camera control unit (3) or one of the television camera control units (3), and/or at least one current measurement unit (14) to measure the electrical current flowing via at least one of the electrical supply contacts (6, 7) of the connector (4, 5) or one of the connectors (4, 5), preferably for the television camera control unit (3) or one of the television camera control units (3).

3. Switching device (1) according to claim 1 or 2, **characterised in that** each connector (4, 5) has in addition at least one electrical signal contact (15, 16) for the transmission of information via at least one electrical signal line between television camera (2) and television camera control unit (3), and the switching device (1) has at least one electrical signal line switch (17) for the alternating connection of the electrical signal contact (15) of the connector for the television camera (2) or one of the connectors (4) for the television cameras (2) with the electrical signal contact (16) of the connector (5) for the television camera control unit (3) or one of the connectors (5) for the television camera control units (3).

4. Switching device (1) according to claim 2 or 3, **characterised in that** the switching control unit (12) is connected to the voltage measurement unit (13) and/or the current measurement unit (14) to assess the measurement values thereof and has a first operating mode, in which it allows a switching on and/or switching over and/or switching off of the electrical supply line switch (10) and the optical switch (11) and the electrical signal line switch (17), if present, and it has at least one additional operating mode, in which it prevents a switching on and/or switching over and/or switching off of the electrical supply line switch (10) and the optical switch (11) and the electrical signal line switch (17), if present.

5. Switching device (1) according to claim 4, **characterised in that** the switching control unit (12) is in the first operating mode when the electrical voltage measured by the voltage measurement unit (13), preferably instantaneously, is at a voltage limit value (18) or below a voltage limit value (18), and is in the additional operating mode when the electrical voltage measured by the voltage measurement unit (13), preferably instantaneously, is above the voltage limit value (18).

6. Switching device (1) according to claim 4 or 5, **characterised in that** the switching control unit (12) is in the first operating mode when a value pair (19), consisting of the electrical voltage measured, preferably instantaneously, by the voltage measurement unit (13) and the electrical current measured, preferably instantaneously, by the current measurement unit (14), is within an allowed voltage-current range (20), and is in the additional operating mode when this value pair (19) is outside the allowed voltage-current range (20).

7. Switching device (1) according to one of claims 1 to 6, **characterised in that** the switching device (1) has at least one manual input device (21) for inputting commands to switch on and/or switch over and/or switch off by hand and/or at least one interface (22) for inputting commands to switch on and/or switch over and/or switch off by means of an external input device (23).

8. Switching device (1) according to one of claims 1 to 7, **characterised in that** each connector (4, 5) is designed as a single connector socket or as a single connector plug and has all the contacts (6, 7, 8, 9, 15, 16) needed to connect to a television camera (2) or a television camera control unit (3).

9. Switching device (1) according to one of claims 1 to 8, **characterised in that** the switching device (1) has a plurality of connectors (4) for a plurality of television cameras (2) and a plurality of connectors (5) for a plurality of television camera control units (3).

10. Switching device (1) according to one of claims 1 to 9, **characterised in that** the switching device (1) has a housing (24) and the electrical supply line switch (10) and the optical switch (11) as well as the electrical signal line switch (17), if present, and the switching control unit (12) are arranged inside the housing (24), and the connectors (4, 5) as well as the manual input device (21) and/or the interface (22), if present, are arranged so that they are accessible from the outside of the housing (24).

## Revendications

1. Dispositif de commutation (1) pour permettre de connecter en alternance au moins une caméra de télévision (2) avec une unité de contrôle de caméra de télévision (3) parmi au moins deux unités de contrôle de caméra de télévision (3) ou pour permettre de connecter en alternance au moins une unité de contrôle de caméra de télévision (3) avec au moins une caméra de télévision (2) parmi au moins deux caméras de télévision (2),
ce dispositif de commutation (1) comportant des branchements (4, 5) pour la(les) caméra(s) de télévision (2) et la(les) unité(s) de contrôle de caméra de télévision (3), et chaque branchement (4, 5) comportant des contacts d'alimentation électrique (6, 7) permettant l'alimentation en courant et en tension de la caméra de télévision (2) par l'unité de contrôle de caméra de télévision (3), et au moins un contact optique (8, 9) permettant la transmission d'informations par l'intermédiaire d'un câble conducteur optique entre la caméra de télévision (2) et l'unité de contrôle de caméra de télévision (3),
le dispositif de commutation (1) comprenant au moins un commutateur de conducteur d'alimentation électrique (10) pour permettre de connecter en alternance les contacts d'alimentation électrique (6) du branchement (4) de caméra de télévision (2) ou l'un des branchements (4) des caméras de télévision (2) avec les contacts d'alimentation électrique (7) du branchement (5) de l'unité de contrôle de caméra de télévision (3) ou l'un des branchements (5) des unités de contrôle de caméra de télévision (3), et
au moins un commutateur optique (11) permettant de connecter en alternance le contact optique (8) du branchement (4) de la caméra de télévision (2) ou l'un des branchements (4) des caméras de télévision (2) avec le contact optique (9) du branchement (5) de l'unité de contrôle de caméra de télévision (3) ou l'un des branchements (5) des unités de contrôle de caméra de télévision (3), et
au moins une unité de contrôle de commutation (12) permettant de commander le commutateur de conducteur d'alimentation électrique (10) et le commutateur optique (11).

2. Dispositif de commutation (1) conforme à la revendication 1,
**caractérisé en ce qu'**
il comporte au moins une unité de mesure de tension (13) permettant de mesurer la tension électrique appliquée entre les contacts d'alimentation électrique (6, 7) du branchement (4, 5) ou l'un des branchements (4, 5) de préférence de l'unité de contrôle de caméra de télévision (3) ou l'une des unités de contrôle de caméra de télévision (3), et/ou au moins une unité de mesure de courant (14) permettant de mesurer le courant électrique passant sur au moins l'un des contacts d'alimentation électrique (6, 7) du branchement (4, 5) ou de l'un des branchement (4, 5), de préférence de l'unité de contrôle de caméra de télévision (3) ou de l'une des unités de contrôle de caméra de télévision (3).

3. Dispositif de commutation (1) conforme à la revendication 1 ou 2,
**caractérisé en ce que**
chaque branchement (4, 5) comporte en outre au moins un contact de signal électrique (15, 16) permettant la transmission d'informations par l'intermédiaire d'au moins un conducteur de signal électrique entre la caméra de télévision (2) et l'unité de contrôle de caméra de télévision (3), et, le dispositif de commutation (1) comporte au moins un commutateur de conducteur de signal électrique (17) pour permettre de connecter en alternance le contact de signal électrique (15) du branchement de caméra de télévision (2) ou l'un des branchements (4) des caméras de télévision (2) avec le contact de signal électrique (16) du branchement (5) de l'unité de contrôle de caméra de télévision (3) ou l'un des branchements (5) des unités de contrôle de caméra de télévision (3).

4. Dispositif de commutation (1) conforme à la revendication 2 ou 3,
**caractérisé en ce que**
l'unité de contrôle de commutation (12) est, pour permettre l'exploitation des valeurs de mesure de l'unité de mesure de tension (13) et/ou de l'unité de mesure de courant (14) connectée avec cette(ces) unité(s) et comporte un premier mode de fonctionnement dans lequel elle autorise un branchement et/ou une commutation et/ou une coupure du commutateur de conducteur d'alimentation électrique (10) et du commutateur optique (11) et du commutateur de conducteur de signal électrique (7) le cas échéant présent, ainsi qu'au moins un autre mode de fonctionnement dans lequel elle fait cesser un branchement et/ou une commutation et/ou une coupure du commutateur de conducteur d'alimentation électrique (10) et du commutateur optique (11) et du commutateur de conducteur de signal électrique (17) éventuellement présent.

5. Dispositif de commutation (1) conforme à la revendication 4,
**caractérisé en ce que**
l'unité de contrôle de commutation (12) se trouve dans le premier mode de fonctionnement lorsque la tension électrique mesurée par l'unité de mesure de tension (13), de préférence instantanément est située à une valeur limite de la tension (18) ou au-dessous d'une valeur limite (18) de la tension et se trouve dans l'autre mode de fonctionnement lorsque la tension électrique mesurée de préférence instantanément par l'unité de mesure de tension (13) est située au-dessus de la valeur limite (18) de la tension.

6. Dispositif de commutation (1) conforme à la revendication 4 ou 5,
**caractérisé en ce que**
l'unité de contrôle de commutation (12) se trouve dans le premier mode de fonctionnement lorsqu'une paire de valeurs (19) constituée de la tension électrique mesurée de préférence instantanément par l'unité de mesure de tension (13) et le courant électrique mesuré de préférence instantanément par l'unité de mesure du courant (14) est située dans une plage tension-courant (20) admissible et se trouve dans l'autre mode de fonctionnement lorsque cette paire de valeurs (19) est située en dehors de cette plage tension-courant (20) admissible.

7. Dispositif de commutation (1) conforme à l'une des revendications 1 à 6,
**caractérisé en ce qu'**
il comporte au moins un dispositif d'entrée manuelle (21) pour permettre l'entrée manuelle d'ordres de branchement et/ou de commutation et/ou de coupure et/ou au moins une interface (22) pour permettre l'entrée d'ordres de branchement et/ou de commutation et/ou de coupure au moyen d'un dispositif d'entrée externe (23).

8. Dispositif de commutation (1) conforme à l'une des revendications 1 à 7,
**caractérisé en ce que**
chaque branchement (4, 5) est réalisé sous la forme d'une douille de branchement unique et/ou d'une fiche de branchement unique et comporte tous les contacts (6, 7, 8, 9, 15, 16) nécessaires pour effectuer la connexion d'une caméra de télévision (2) ou d'une unité de contrôle de caméra de télévision (3).

9. Dispositif de commutation (1) conforme à l'une des revendications 1 à 8,
**caractérisé en ce qu'**
il comporte plusieurs branchements (4) pour plusieurs caméras de télévision (2) et plusieurs branchements (5) pour plusieurs unités de contrôle de caméra de télévision (3).

10. Dispositif de commutation (1) conforme à l'une des revendications 1 à 9,
**caractérisé en ce qu'**
il comporte un boîtier (24), et le commutateur de conducteur d'alimentation électrique (10) et le commutateur optique (11) ainsi que le cas échéant le commutateur de conducteur de signal électrique (17) et l'unité de contrôle de commutation (12) sont montés à la partie interne du boîtier (24), et les branchements (4, 5) ainsi que le cas échéant également le dispositif d'entrée manuelle (21) et/ou l'interface (22) sont montés en étant accessibles par l'extérieur sur le boîtier (24).
